# EUROPÄISCHE PATENTSCHRIFT

(11) **EP 1 580 399 B1**
(45) Veröffentlichungstag und Bekanntmachung des Hinweises auf die Patenterteilung: **15.11.2006**
(21) Anmeldenummer: 04090120.9
(22) Anmeldetag: 25.03.2004
(51) Int. Cl.: F01D 5/16, F01D 5/14

(54) **Verdichter für ein Flugzeugtriebwerk**
Compressor for an aircraft engine.
Compresseur pour un moteur d'avion

(43) Veröffentlichungstag der Anmeldung: 28.09.2005
(73) Patentinhaber: Rolls-Royce Deutschland Ltd & Co KG, 15827 Dahlewitz (DE)
(72) Erfinder: Johann, Erik, 12103 Berlin (DE)
(74) Vertreter: Wablat, Wolfgang

(56) Entgegenhaltungen:
- EP-A- 1 081 332
- GB-A- 347 138
- GB-A- 750 305
- US-A- 3 304 056

## Beschreibung

Die Erfindung betrifft einen Verdichter für ein Flugzeug-triebwerk mit an einer Verdichterscheibe angebrachten Verdichterschaufeln, insbesondere Verdichterschaufeln mit kleinem Höhen-Sehnenverhältnis.

Bei bestimmten Flugzeugtriebwerken werden bekanntermaßen Verdichter verwendet, die bei verringerter Schaufelzahl Verdichterschaufeln mit großer Sehnenlänge aufweisen. Zwar weisen die so ausgebildeten Verdichter gegenüber den bis dahin bekannten Ausführungen bestimmte Vorteile auf, andererseits wurde gerade bei der Verwendung dieses neuen Schaufeltyps eine unerwartete Belastung in der Verdichterscheibe, an der die Schaufeln befestigt sind, festgestellt.

Ein Verdichter gemäß des Stands der Technik ist aus Dokument GB 750305 bekannt.

Der Erfindung liegt die Aufgabe zugrunde, den Verdichter so auszubilden, dass eine Beschädigung oder Lebensdauerverminderung der Verdichterscheibe und Verdichterschaufel verhindert wird.

Erfindungsgemäß wird die Aufgabe mit einem gemäß den Merkmalen des Patentanspruchs 1 ausgebildeten Verdichter gelöst.

Aus den Unteransprüchen ergeben sich weitere Merkmale und vorteilhafte Weiterbildungen der Erfindung.

Überraschenderweise wurde gefunden, dass durch ein erfindungsgemäß in bestimmtem Abstand von der Schaufelvorderkante und im Wesentlichen parallel zu dieser verlaufendes, eine Oberflächenrauhigkeit bildendes Mittel auf der Saugseite der Verdichterschaufeln die Belastung in der Verdichterscheibe reduziert werden kann. Im Ergebnis umfangreicher Untersuchungen wurde festgestellt, dass unter bestimmten, durch die Flughöhe und Fluggeschwindigkeit, die Reynoldszahl und die Strouhalzahl charakterisierten Flugbedingungen unerwartet starke Eigenschwingungen der einzelnen Schaufeln, das heißt, zweite und dritte Biegeschwingungen und erste Torsionsschwingung, auftreten, die über den Schaufelfuß auf die Verdichterscheibe übertragen werden und zu deren Beschädigung führen. Die Anordnung zur Strömungsübergangsfixierung auf der Saugseite in einem bestimmten Abstand von der Schaufelvorderkante verfolgt das Ziel, die bekanntermaßen auf die Schaufelfläche wirkenden Verdichtungsstöße nicht mehr oder nur noch in eingeschränktem Umfang oszillieren zu lassen und somit den Kopplungseffekt zwischen den oszillierenden Verdichtungsstößen und den Eigenschwingungen (zweite und dritte Biegeschwingung, erste Torsionsschwingung der Schaufel), durch den die Eigenschwingungen in einem Maße verstärkt werden, dass es zu der erwähnten Beschädigung kommt, zu unterdrücken. Der Erfindungsgedanke besteht in der Vermeidung oder Einschränkung der periodischen Bewegung der Verdichtungsstöße und deren Rückwirkung auf die Eigenschwingungen durch die Fixierung des Strömungsübergangs, der die dem Verdichtungsstoß vorgelagerte Umschlagstelle von der laminaren zur turbulenten Grenzschichtströmung lokal auf der Saugseite soweit einschränkt, das heißt, an der oszillierenden Bewegung hindert und dadurch auch die oszillierende Bewegung der Verdichtungsstöße und deren schwingungsverstärkende Wirkung auf die Eigenschwingungen der Schaufeln vermeidet und zwar unabhängig vom Betriebsbereich der Verdichterschaufel. Dadurch können Verdichter mit Verdichterschaufeln zur Verfügung gestellt werden, die auch unter den oben beschriebenen spezifischen Flugbedingungen nicht beschädigt werden.

In vorteilhafter Ausgestaltung der Erfindung befindet sich die Strömungsübergangsfixierung in einem von der Schaufelspitze ausgehenden oberen Bereich der Verdichterschaufel und besteht entweder aus einem an die Saugseite der Verdichterschaufel gebundenen körnigen Material oder ist in Form von an die Schaufeloberfläche angeformten Erhöhungen oder in diese eingeformten Vertiefungen oder Bohrungen integraler Bestandteil der Verdichterschaufel. Vorzugsweise sind die körnigen Bestandteile in ein Bindematerial eingebunden oder aufgespritzt, während die Erhöhungen beispielsweise eine dreieckige Grundfläche haben können und die Vertiefungen als halbkreisförmige Rillen ausgebildet sind. Die Strömungsübergangsfixierung wird durch mindestens eine Reihe solcher Erhöhungen oder mindestens eine Rille gebildet.

Der mit der erfindungsgemäß angeordneten Strömungsumschlagsfixierung ausgebildete Verdichter wird neben der langen Lebensdauer bei im Wesentlichen unverändertem Gewicht auch allen aerodynamischen Anforderungen gerecht. Positionierung und Dimensionierung der oben angeführten Mittel sind so vorzusehen, dass zudem das Pumpverhalten nicht beeinflusst und sogar verbessert werden kann. Die Leistungsdaten der Beschaufelung sind ebenfalls davon kaum oder nicht beeinflusst. Im Bereich hoher Reynoldszahlen, typischerweise 8.0x10⁶ bis 5.0x10⁷, ist die Positionierung und Dimensionierung so vorzusehen, dass das Verhalten der Verdichterschaufel bezüglich Pumpen und Strömungsabriss nicht beeinträchtigt wird. Im Bereich kleiner Reynoldszahlen typischerweise 0.5x10⁶ bis 8.0x10⁶ ist die Positionierung und Dimensionierung so vorzusehen, dass zum einen die Verminderung der Schaufelschwingung erreicht wird und zum anderen das Verhalten der Verdichterschaufel bezüglich Pumpen und Strömungsabriss nicht beeinträchtigt wird.

Ein Ausführungsbeispiel der Erfindung wird anhand der Zeichnung näher erläutert. Es zeigen:
- Fig. 1: eine perspektivische Darstellung einer Verdichterschaufel mit einem erfindungsgemäß angeordneten Mittel zur Strömungsübergangsfixierung
- Fig. 2a-f: verschiedene Gestaltungsvarianten von Strömungsübergangsfixierungsmitteln; und
- Fig. 3: eine graphische Darstellung der Kommunikation zwischen der Grenzschichtströmung und der Oszillation des Verdichtungsstoßes an einer Verdichterschaufel.

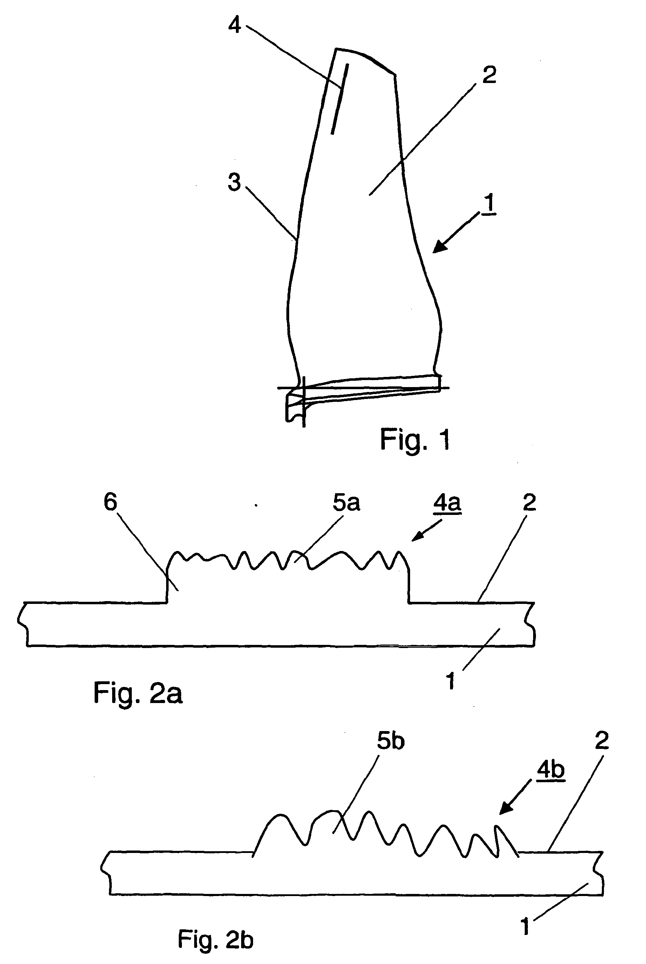

Fig. 1 zeigt eine Verdichterschaufel 1, auf deren Saugseite 2 in geringem Abstand von der Vorderkante 3 ein langgestrecktes Strömungsübergangsfixierungsmittel 4 angebracht ist. Das Strömungsübergangsfixierungsmittel 4 verläuft etwa parallel zur Vorderkante 3 und im oberen Drittel der Verdichterschaufel 1. Am Umfang einer Verdichterscheibe (nicht dargestellt) sind mehrere solcher Verdichterschaufeln 1 befestigt.

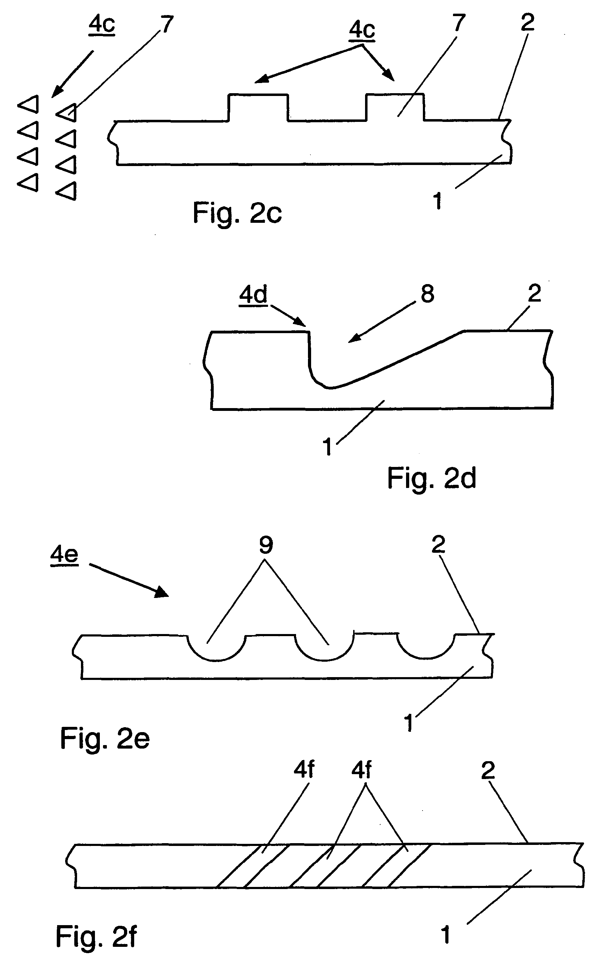

Das Strömungsübergangsfixierungsmittel 4 ist, wie die Figuren 2a bis 2f zeigen, durch einen auf der Saugseite der Verdichterschaufel 1 ausgebildeten - unterschiedlich gestalteten - langgestreckten Rauhigkeitsbereich gebildet. In der Zeichnung sind beispielhaft verschiedene Ausführungsvarianten des Strömungsübergangsfixierungsmittels 4 wiedergegeben. Das in Fig. 2a dargestellte Strömungsübergangsfixierungsmittel 4a ist auf seiner Oberfläche mit einem feinkörnigen Material 5a von bestimmter Korngröße fest verbunden. Dabei kann es sich um in ein Bindematerial 6, das erosionsresistent sein muss, eingebundenes körniges Material handeln. In der Ausführungsform nach Fig. 2b wird das Strömungsübergangsfixierungsmittel 4b durch ein erosionsresistentes körniges Material 5b mit größerer Korngröße gebildet, das unmittelbar mit der Oberfläche der Saugseite 2 verbunden ist. Bei der in Fig. 2c gezeigten dritten Variante besteht das Strömungsübergangsfixierungsmittel 4c aus zwei Reihen von auf der Oberfläche der Verdichterschaufel 1 angeformten dreieckförmigen Erhöhungen 7, die erosionsresistent sein müssen. Schließlich kann das Strömungsübergangsfixierungsmittel 4d, 4e, wie die Figuren 2d und 2e zeigen, auch in Form einer Rille 8 oder mehrerer nebeneinander angeordneter Rillen 9 in die Oberfläche der Verdichterschaufel 1 - beispielsweise durch Kaltwalzen - eingeformt sein. Die Breite des Strömungsübergangsfixierungsmittels 4 liegt bei den vorstehend erläuterten Ausführungsformen zwischen 3 und 15 Millimetern, während dessen Höhe bzw. Tiefe zwischen 0.1 und 0.3 Millimetern schwanken kann. Die Fixierung des Strömungsüberganges kann auch, wie in 2f dargestellt, in einfacher Weise durch in einem Streifen angeordnete, von der Saugseite zur Druckseite durchgehende Bohrungen 4f erfolgen.

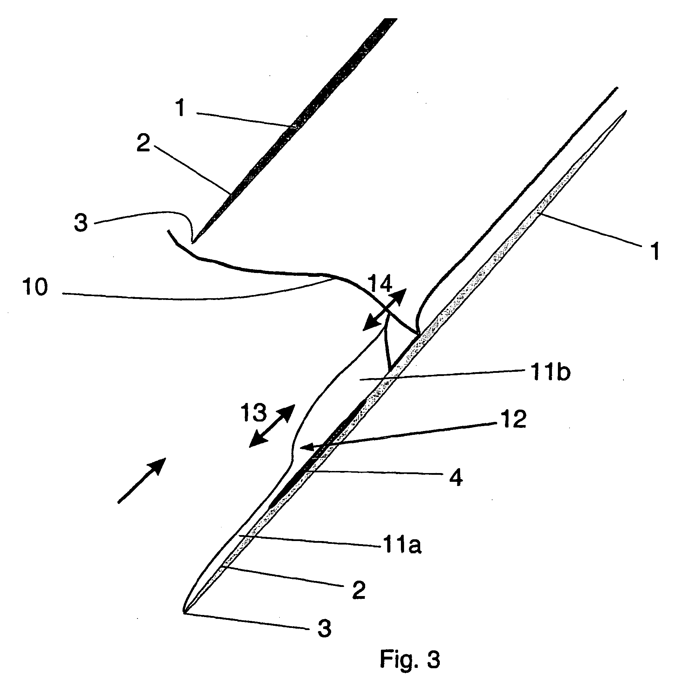

Die Funktion des erfindungsgemäß an einer Verdichterschaufel angeordneten und ausgebildeten Strömungsübergang-Fixierungsmittels 4 wird nachfolgend anhand der Fig. 3 näher erläutert. Bei den Untersuchungen über die unerwartete Belastung in den mit Verdichterschaufeln 1 ausgebildeten Verdichterscheiben wurde gefunden, dass diese Belastung unter bestimmten Flugbedingungen auftritt, die zu Reynoldszahlen im Bereich von 0.5x10⁶ bis 8.0x10⁶ und einer dem 1.1 bis 1.5-fachen der Schallgeschwindigkeit entsprechenden Geschwindigkeit der Verdichterschaufelspitze in Verbindung mit den auf die Geschwindigkeit bezogenen Eigenschwingungen der Verdichterschaufel (1. bis 3. Biegeschwingung und 1. Torsionsschwingung an den Schaufelspitzen) gehören. An der Verdichterschaufel 1 treten, wie Fig. 3 zeigt, in einem Bereich von etwa 45 % bis 70 % der Schaufelbreite Verdichtungsstöße - in der Zeichnung in Form eines typischen Lambda-Verdichtungsstoßes 10 dargestellt - auf. Aufgrund des hinter dem Verdichtungsstoß auftretenden hohen Druckes wirken entsprechend große Kräfte auf die Verdichterschaufel. Darüber hinaus existiert an der Schaufeloberfläche eine mit den Verdichtungsstößen kommunizierende Grenzschichtströmung 11a, 11b, die bis zu einem Strömungsübergangspunkt 12 zunächst laminar (11a) ist und anschließend in eine turbulente Strömung 11b übergeht. Da sich der Strömungsübergangspunkt 12 gemäß dem Pfeil 13 periodisch hin und her verschiebt, bewegt sich auch der Lambda-Verdichtungsstoß 10 (Fall 1) gemäß dem Pfeil 14 zwischen einer ersten und zweiten Stellung mit einer der periodischen Verschiebung des Strömungsübergangspunktes 12 entsprechenden Frequenz. Die Oszillation des Stoßes (Fall 2) kann auch derart entstehen, dass der Zustand des Stoßes zwischen einem starken (Senkrechten Stoß) und einem schwachen Verdichtungsstoß (Lambda Stoß) wechseln kann. In beiden Fällen werden durch den periodischen Stoßwechsel die zweite und dritte Biegeschwingung und die erste Torsionsschwingung der Verdichterschaufel 1 angeregt und können infolge des Kopplungseffektes mit der Verdichtungsstoßschwingung zu einer Belastung am Schaufelfuß führen, die zu der oben beschriebenen unerwarteten Belastung in der Verdichterscheibe und -schaufel führt. Durch Anordnung der in den Figuren 2 und 3 dargestellten Strömungsübergangfixierung auf der Saugseite 2 der Verdichterschaufel 1 vor dem Verdichtungsstoß 10 werden - entgegen der in Fig. 3 gezeigten schwingenden Darstellung - der Strömungsübergangspunkt 12 der Grenzschichtströmung und damit auch der Verdichtungsstoß 10 in ihrer Lage fixiert bzw. in ihrer Oszillation so weit eingeschränkt, dass der schwingungsverstärkende Kopplungseffekt zwischen den Eigenschwingungen der Verdichterschaufel und den Verdichtungsstoßschwingungen unterdrückt wird und die Eigenschwingungen der Verdichterschaufel 1 eine bestimmte Größe nicht überschreiten werden.

### Bezugszeichenliste

- 1: Verdichterschaufel
- 2: Saugseite
- 3: Vorderkante
- 4: (4a-4f) Strömungsübergang-Fixierungsmittel
- 5: (5a, 5b) feinkörniges/grobkörniges Material
- 6: erhöhtes Bindematerial
- 7: dreieckförmige Erhöhungen
- 8: Rille mit halbkreisförmigem Querschnitt
- 9: Rille mit nach oben auslaufendem Querschnitt
- 10: (Lambda-)Verdichtungsstoß
- 11a: laminare Grenzschichtströmung
- 11b: turbulente Grenzschichtströmung
- 12: Strömungsübergangsstelle
- 13: Oszillation von 12
- 14: Oszillation von 10

## Patentansprüche

1. Verdichter für ein Flugzeugtriebwerk mit an einer Verdichterscheibe angebrachten Verdichterschaufeln (1), insbesondere Verdichterschaufeln mit kleinem Höhe/Sehnenlänge-Verhältnis, die unter Betriebsbedingungen durch Eigenschwingungen und auf der Saugseite (2) im Abstand von der Vorderkante (3) wirkende Verdichtungsstöße (10) belastet sind, wobei auf der Saugseite (2) stromauf des Verdichtungsstoßes (10) in einem oszillierenden Strömungsübergangspunkt (12) eine zunächst laminare Grenzschichtströmung (11a) in eine turbulente Grenzschichtströmung (11b) übergeht und ein auf der Saugseite (2) stromauf des möglichen Wirkungsbereiches der Verdichtungsstöße (10) im wesentlichen senkrecht zu Grenzschichtströmung ausgebildetes Strömungsübergangsfixierungsmittels (4) zur Begrenzung der Oszillation des Strömungsübergangspunktes (12) und damit zur Begrenzung von deren schwingungsverstärkender Wirkung auf die Verdichtungsstöße (10) vorgesehen ist, um eine Verstärkung der unter bestimmten Flugbedingungen auftretenden ersten und zweiten Biegeschwingungen sowie der Torsionsschwingung der Verdichterschaufel (1) durch stark oszillierende Verdichtungsstöße zu verhindern.

2. Verdichter nach Anspruch 1, **dadurch gekennzeichnet, dass** das Strömungsübergang-Fixierungsmittel (4) in einem langgestreckten, von der Schaufelspitze ausgehenden Teilbereich der Verdichterschaufel (1) ausgebildet ist.

3. Verdichter nach Anspruch 2, **dadurch gekennzeichnet, dass** das Strömungsübergang-Fixierungsmittel (4) im wesentlichen parallel zur Vorderkante (3) verläuft.

4. Verdichter nach einem der Ansprüche 1 bis 3, **dadurch gekennzeichnet, dass** das Strömungsübergangsfixierungsmittel (4) eine auf der Saugseite (2) der Verdichterschaufel (1) gebildete, langgestreckte Oberflächenrauhigkeit umfasst.

5. Verdichter nach Anspruch 4, **dadurch gekennzeichnet, dass** die Oberflächenrauhigkeit ein feinkörniges Material (5a) umfasst, das in eine erhöhte Bindemittelschicht (6) eingebunden ist

6. Verdichter nach Anspruch 4, **dadurch gekennzeichnet, dass** die Oberflächenrauhigkeit ein grobkörniges Material umfasst, dass durch ein Bindemittel unmittelbar mit der Schaufeloberfläche verbunden ist.

7. Verdichter nach Anspruch 4, **dadurch gekennzeichnet, dass** die Oberflächenrauhigkeit für das Strömungsübergang-Fixierungsmittel (4) an die Oberfläche der Verdichterschaufel (1) angeformte Erhöhungen (7) aus dem Schaufelmaterial sind.

8. Verdichter nach Anspruch 7, **dadurch gekennzeichnet, dass** die Erhöhungen (7) in der Draufsicht dreieckförmig geformt sind.

9. Verdichter nach Anspruch 8, **dadurch gekennzeichnet, dass** mindestens zwei Reihen zueinander versetzt angeordneter dreieckförmiger Erhöhungen (7) vorgesehen sind

10. Verdichter nach Anspruch 4, **dadurch gekennzeichnet, dass** die Oberflächenrauhigkeit durch mindestens eine quer zur Grenzschichtströmung verlaufende Rille (8 oder 9) gebildet ist.

11. Verdichter nach Anspruch 10, **dadurch gekennzeichnet, dass** die Rille (8) halbkreisförmig gewölbt ist.

12. Verdichter nach Anspruch 10, **dadurch gekennzeichnet, dass** die Rille (9) einen in Strömungsrichtung zur Schaufeloberfläche hin allmählich auslaufenden Querschnitt aufweist.

13. Verdichter nach Anspruch 4, **dadurch gekennzeichnet, dass** die Oberflächenrauhigkeit durch in die Verdichterschaufel (1) eingebrachte Bohrungen (4f) gebildet ist.

14. Verdichter nach einem der Ansprüche 5 bis 9, **dadurch gekennzeichnet, dass** das die Oberflächenrauhigkeit bildende Material und das verwendete Bindemittel eine hohe Erosionsresistenz aufweisen.

## Claims

1. Compressors for an aircraft engine with compressor blades (1) attached to the compressor disk, in particular compressor blades with small span-chord ratio, which, under operating conditions, are loaded by natural frequencies and by compression shocks (10) on the suction side (2) at a certain distance from the leading edge (3), with an initially laminar boundary layer flow (11a) changing into a turbulent boundary layer flow (11b) on the suction side (2) upstream the compression shock (10) in an oscillating flow transition fixation means (4) for limiting the oscillation of the flow transition point (12) and thus for limiting the oscillation-increasing effect on the compression shocks (10) being provided on the suction side (2) upstream the possible range of influence of the compression shocks (10) and essentially vertical to the boundary layer flow, in order to prevent an increase of the first and second bending mode and the torsional mode of the compressor blade (1) occurring under certain conditions of flight by highly oscillating compression shocks.

2. Compressor in accordance with Claim 1, **characterized in that** the flow transition fixation means (4) is provided in a long partial area of the compressor blade (1) extending from the blade tip.

3. Compressor in accordance with Claim 2, **characterized in that** the flow transition fixation means (4) extends essentially parallel to the leading edge (3).

4. Compressor in accordance with one of the Claims 1 to 3, **characterized in that** the flow transition fixation means (4) comprises a long area of surface roughness provided on the suction side (2) of the compressor blade (1).

5. Compressor in accordance with Claim 4, **characterized in that** the surface roughness is provided by a fine-grained material (5a) which is retained in a raised binder layer (6).

6. Compressor in accordance with Claim 4, **characterized in that** the surface roughness is provided by a coarse-grained material which is bonded immediately to the blade surface by means of a binder.

7. Compressor in accordance with Claim 4, **characterized in that** the surface roughness for the flow transition fixation means (4) is provided by protrusions (7) made in the blade material and formed onto the surface of the compressor blade (1).

8. Compressor in accordance with Claim 7, **characterized in that** the protrusions (7) are triangular in top view.

9. Compressor in accordance with Claim 8, **characterized in that** at least two rows of triangular protrusions (7) which are offset to each other are provided.

10. Compressor in accordance with Claim 4, **characterized in that** the surface roughness is provided by at least one groove (8 or 9) extending transversely to the boundary layer flow.

11. Compressor in accordance with Claim 10, **characterized in that** the groove (8) is semi-circularly curved.

12. Compressor in accordance with Claim 10, **characterized in that** the cross-section of the groove (9) gradually runs out towards the blade surface in the direction of flow.

13. Compressor in accordance with Claim 4, **characterized in that** the surface roughness is provided by holes (4f) made in the compressor blade (1).

14. Compressor in accordance with one of the Claims 5 to 9, **characterized in that** the material providing the surface roughness and the binder used have high erosion resistance.

## Revendications

1. Compresseur pour un moteur d'avion avec des aubes de compresseur (1) fixées sur un disque de compresseur, en particulier des aubes avec un faible rapport hauteur/corde, qui dans des conditions de fonctionnement sont soumises à des contraintes par des vibrations propres et des chocs de compression (10) agissant du côté aspiration (2) à une certaine distance du bord d'attaque (3), sachant que du côté aspiration (2) et en amont du choc de compression (10), un écoulement de couche limite tout d'abord laminaire (11a) se transforme en un écoulement de couche limite turbulent (11b) en un point de transition d'écoulement oscillant (12), et que du côté aspiration (2) et en amont de la zone d'action possible des chocs de compression (10) est prévu un dispositif de fixation de la transition de l'écoulement (4) disposé pour l'essentiel perpendiculairement à l'écoulement de la couche limite et destiné à limiter l'oscillation du point de transition de l'écoulement (12) et donc à limiter son effet amplifiant les vibrations sur les chocs de compression (10), afin d'éviter une amplification des premières et deuxièmes vibrations de flexion ainsi que de la vibration de torsion de l'aube de compresseur (1) apparaissant dans certaines conditions de vol et dues à des chocs oscillants fortement.

2. Compresseur selon la revendication nº 1, **caractérisé en ce que** le dispositif de fixation de la transition de l'écoulement (4) est formé dans une zone partielle allongée de l'aube de compresseur (1) partant du bout de l'aube.

3. Compresseur selon la revendication nº 2, **caractérisé en ce que** le dispositif de fixation de la transition de l'écoulement (4) s'étend pour l'essentiel parallèlement au bord d'attaque (3).

4. Compresseur selon une des revendications 1 à 3, **caractérisé en ce que** le dispositif de fixation de la transition de l'écoulement (4) comprend une surface rugueuse allongée formée du côté aspiration (2) de l'aube de compresseur (1).

5. Compresseur selon la revendication nº 4, **caractérisé en ce que** la surface rugueuse comprend un matériau à grains fins (5a) qui est enlié dans une couche d'agent liant (6) faisant saillie.

6. Compresseur selon la revendication nº 4, **caractérisé en ce que** la surface rugueuse comprend un matériau à gros grains qui est lié directement à la surface de l'aube par un agent liant.

7. Compresseur selon la revendication nº 4, **caractérisé en ce que** la surface rugueuse pour le dispositif de fixation de la transition de l'écoulement (4) est constituée de bosses (7) formées sur la surface de l'aube de compresseur (1) à partir du matériau de l'aube.

8. Compresseur selon la revendication n° 7, **caractérisé en ce que**, vues en élévation, les bosses (7) ont une forme triangulaire.

9. Compresseur selon la revendication nº 8, **caractérisé en ce que** sont prévues au moins deux rangées de bosses triangulaires (7) décalées l'une par rapport à l'autre.

10. Compresseur selon la revendication nº 4, **caractérisé en ce que** la surface rugueuse est formée par au moins une rainure (8 ou 9) disposée transversalement par rapport à l'écoulement de la couche limite.

11. Compresseur selon la revendication nº 10, **caractérisé en ce que** la rainure (8) est incurvée en demi-cercle.

12. Compresseur selon la revendication n° 10, **caractérisé en ce que** la rainure (9) présente une section transversale se réduisant progressivement dans le sens d'écoulement en direction de la surface de l'aube.

13. Compresseur selon la revendication nº 4, **caractérisé en ce que** la surface rugueuse est formée par des trous (4f) pratiqués dans l'aube de compresseur (1).

14. Compresseur selon une des revendications 5 à 9, **caractérisé en ce que** le matériau constituant la surface rugueuse et l'agent liant utilisé présentent une forte résistance à l'érosion.
